# EUROPEAN PATENT SPECIFICATION

(11) **EP 1 292 416 B1**
(45) Date of publication and mention of the grant of the patent: **14.11.2007**
(21) Application number: 01934735.0
(22) Date of filing: 15.05.2001
(51) Int. Cl.: B23B 29/08

(54) **TOOL COUPLING**
WERKZEUGKUPPLUNG
RACCORD D'OUTIL

(30) Priority: 18.05.2000 SE 0001827
(43) Date of publication of application: 19.03.2003
(73) Proprietor: Sandvik Intellectual Property AB, 811 81 Sandviken (SE)
(72) Inventor: HANSSON, Per, S-805 96 Gävle (SE); SJÖÖ, Sture, S-805 92 Gävle (SE)
(86) International application number: PCT/SE2001/001062
(87) International publication number: WO 2001/087523

(56) References cited:
- SE-C2- 510 852
- US-A- 5 150 636

## Description

### Technical Field of the Invention

In a first aspect the present invention relates to a tool coupling, preferably for turning tools, for coupling together a fastening part and a tool body which is intended to carry or by itself constitute a cutting insert for chip removing machining, the tool coupling comprising a male part, having a first centre axis, and a female seat, having a second centre axis, the female seat being intended to receive the male part.

### Prior Art

A replaceable cutting body, a so-called loose top, that is attached to a shaft is previously known from DE-OS 34 02 547. The tool in question is especially suited for internal turning. The connection between the cutting body and the shaft is formed in such a way that three radial grooves are recessed in the end of the shaft turned towards the cutting body, while three radial ridges are arranged on the cutting body. In the active position of the tool, an axial screw extends through the cutting body and into the shaft, the ridges being received in the grooves. Thereby, a torque may be transferred from the shaft to the cutting body. By virtue of the relatively flat inclination of the co-operating flanks of the grooves and the ridges, a relatively high axial force is required between the shaft and the cutting body in order to transfer torque of the desired magnitude from the shaft to the cutting body. The high axial force may lead to an extension of the screw. Furthermore, it is difficult to define where abutment or contact between the ridges and grooves will take place since these have a linear extension.

### Aims and Features of the Invention

A primary aim of the present invention is to provide a tool coupling being capable of transmitting large torques.

Another aim of the present invention is that also at a moderate axial prestress, there should be an exceptionally small risk of the transmission of torque failing to work.

Yet another aim of the present invention is to provide a self-centering tool coupling.

An additional aim is to provide a tool coupling, being free of play.

At least the primary aim of the present invention is realized by means of a tool coupling having the features given in the subsequent independent claim 1. Preferred embodiments of the invention are defined in the dependent claims.

In addition to the tool coupling as such, the invention also relates to two different tool bodies to be used in the coupling. These tool bodies are defined in claims 6 and 7 respectively.

### Brief Description of the Drawings

Below preferred embodiments of the tool coupling according to the present invention will be described, reference being made to the accompanying drawings, in which
- Fig 1: is a perspective view of a tool body or holder for a parting tool, said tool holder having a male part included in a coupling according to the invention;
- Fig 2: is a perspective view of a fastening part, which has a female seat included in the tool coupling according to the invention;
- Fig 3: is an exploded view in perspective of the parts included in a complete tool, the tool having a tool coupling according to the invention;
- Fig 4: is a section A-A in Fig 9 through a contact area between a male part and a female seat in an assembled state;
- Fig 5: is a planar view of a turning tool, including a coupling according to the invention;
- Fig 6: is a section B-B in Fig 5;
- Fig 7: is a snake's eye perspective view of a cutting insert provided with a male part included in a tool coupling according to the invention;
- Fig 8: is a perspective view of a circular cutting insert, which is provided with a female seat included in a tool coupling according to the present invention;
- Fig 9: is an enlarged schematic section showing in detail how teeth and recesses co-operate in a tool coupling according to the invention; and
- Figs 10-14: are similar sections showing teeth and recesses of additional embodiments of the tool coupling according to the invention.

### Detailed Description of Preferred Embodiments of the Present Invention

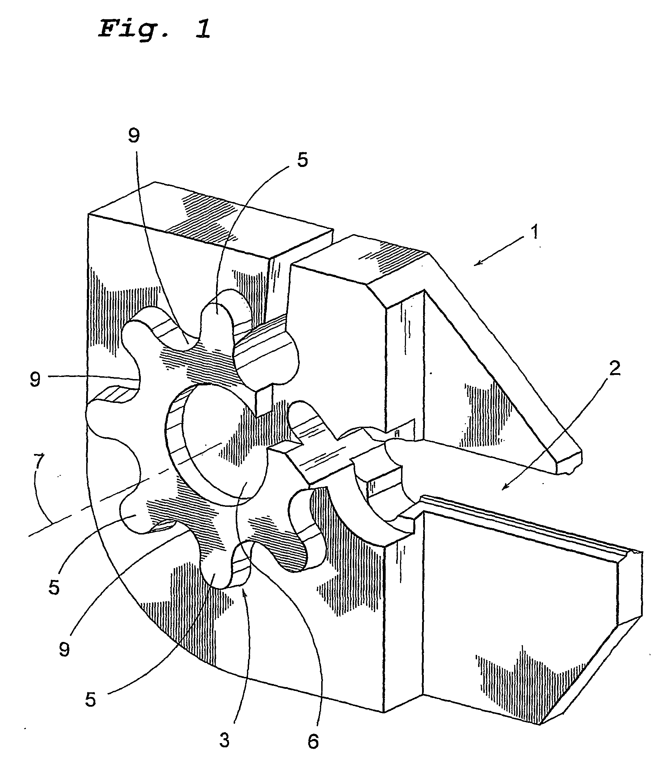

The tool illustrated in Figs 1-3 is intended to be used for, for instance, parting and grooving, and comprises an adaptor or fastening part in the form of a tool holder 1, which is provided with a male part 3 included in the tool coupling according to the invention. This male part 3 will be described in more detail below. The tool holder 1 also comprises an insert seat 2 for receipt of a cutting insert (not shown) for chip removing machining.

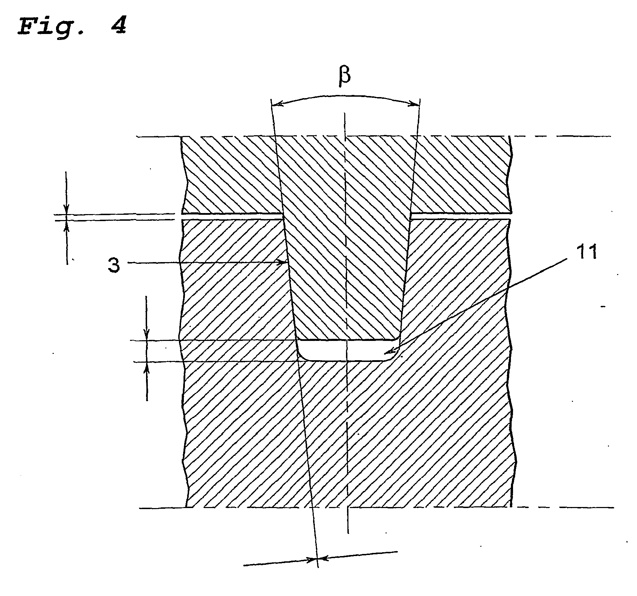

The male part 3, (see Fig 1), comprises a number of first teeth 5, which are spaced-apart from each other, and are tangent to an imaginary circle having its centre along a first centre axis 7, and are directed radially away from said first centre axis 7. The first teeth 5 are interspaced by a number of first recesses 9, which in turn are tangent to an imaginary circle also having its centre along the first centre axis 7, and are directed away from said first centre axis 7. The male part 3 including the teeth thereof has a slightly conical shape, if so, the cone angle β, see Fig 4, being in the range of 1°-30°, preferably 2°-14°. In the centre of the male part 3, a first internally threaded cylindrical hole 6 is recessed having the centre thereof along the first centre axis 7.

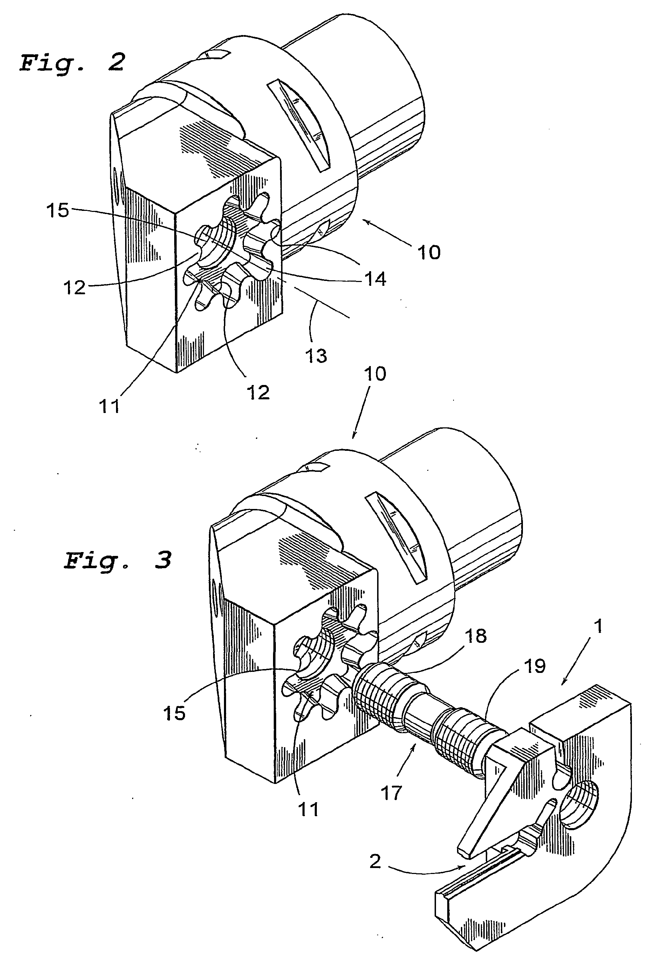

In Fig 2 a fastening part or adaptor 10 is shown, one end of which is intended to be coupled to a machine tool. At the opposite end thereof, adaptor 10 has a female seat 11 included in the tool coupling according to the invention. This female seat is formed to fit the male part 3, i.e. the male part 3 should be received in the female seat 11. Correspondingly, as for the male part 3, the female seat 11 comprises a number of second teeth 12, which are spaced-apart from each other, and which are tangent to an imaginary circle having its centre along a second centre axis 13, and are directed radially inward from the surrounding land. The second teeth 12 are spaced-apart by a number of second recesses 14, which are tangent to an imaginary circle also having its centre along the second centre axis 13. Also the female seat 11, including the teeth thereof, has a slightly conical shape, with a conicity equalling the conicity of the male part 3. In the centre of the female seat 11, a second internally threaded cylindrical hole 15 is recessed having the centre thereof along the second centre axis 13.

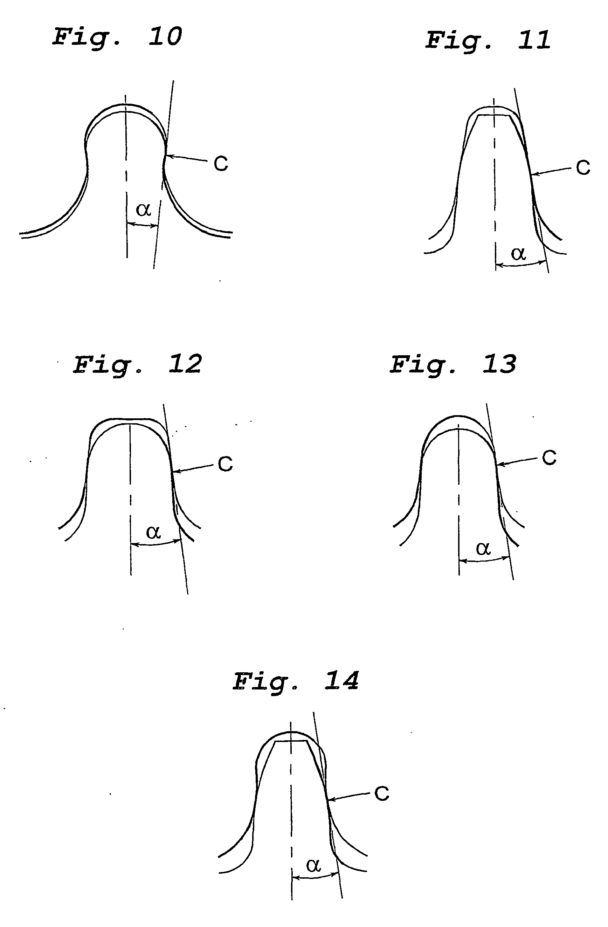

In the embodiment according to Figs 1-3, the teeth 5, 12 have a convex free end and the recesses 9, 14 have a concave bottom. However, the shape of the teeth 5, 12 and the recesses 9, 14 may vary widely within the scope of the invention, as illustrated in Figs 10-14.

As mentioned above, the tool coupling according to the present invention comprises a male part 3 and a female seat 11, the same being formed to mate and to force-wise co-operate with each other as for the transmission of torque between the tool body 1 and the adaptor 10, the first and second the centre axes 7, 13 coinciding with each other, in the assembled state. In the exploded view of Fig 3 the tool body 1 and the adaptor 10 are shown in the position to be coupled together, i.e. the male part 3 should be received in the female seat 11. In order to bring about the necessary axial force, a screw 17 is arranged, said screw 17 being provided with external threads 18, 19 at the two ends thereof. Said external threads 18, 19 co-operate with the internally threaded holes 6 and 15, respectively, the male part 3 being received in the female seat 11 when the screw 17 is rotated. Then a safe securing of the tool body 1 in relation to the adaptor 10 takes place.

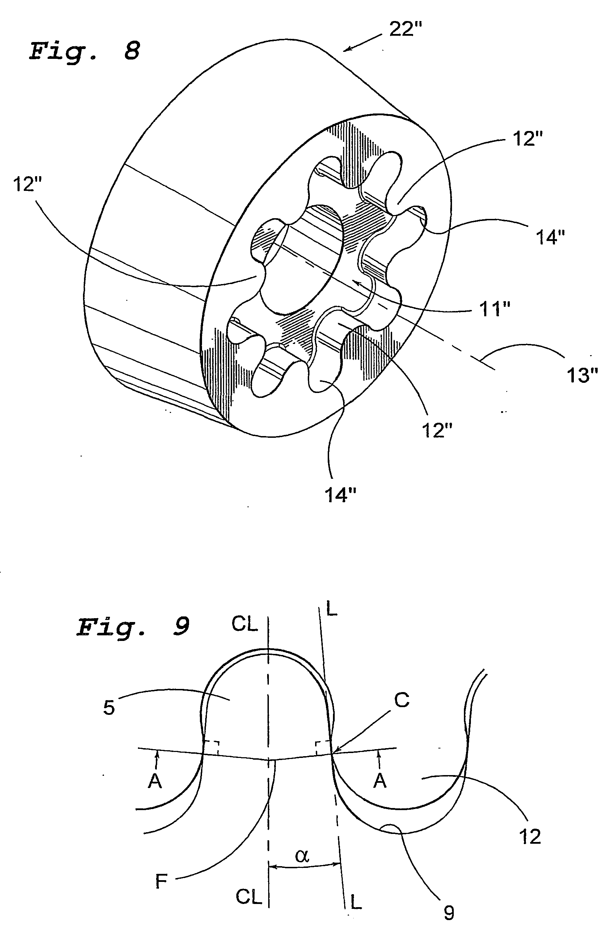

In Fig 4, the section A-A of Fig 9 through the contact area for the mutual abutment or contact between a tooth and a recess is shown. The direct abutment takes place between the conical surfaces of the interengaging teeth while there is a limited play between those surfaces of the coupling which are situated farthest away from the centre axis. There is a larger play between the end surface of the male part 3 and the bottom of the female seat 11. This means that on additional axial displacement of the male part 3 and the female seat 11 towards each other, the surfaces situated outermost from the centre axis will come to abutment against each other, while the opposite surfaces of the male part 3 and the female seat 11 will not be in contact with each other. The fact that abutment takes place at the surfaces situated outermost from the centre axis, leads to an increased stability of the tool coupling being obtained, especially pertaining to bending loads, in comparison with if the opposite surfaces of the male part 3 and the female seat 11 abut against each other.

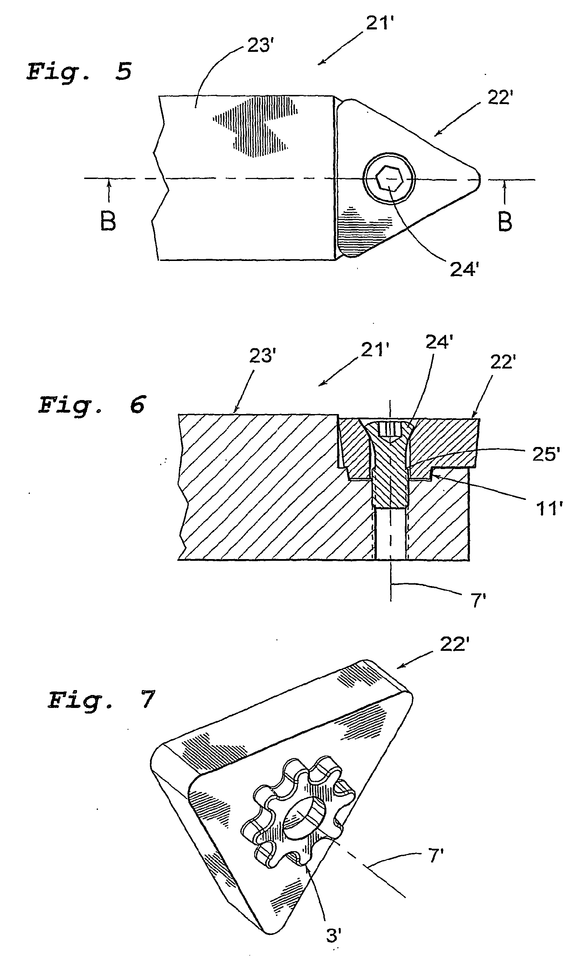

In Figs 5 and 6 a turning tool 21' is shown, which has a triangular cutting insert 22' received in an insert seat in a holder 23' included in the turning tool 21'. The cutting insert 22' is in the usual way secured in the insert seat by means of a securing screw 24' extending through a central hole 25' in the cutting insert. The centre of the hole 25' is situated along a centre axis 7', which also is the centre axis of the screw 24'. As is seen in Fig 6 and Fig 7, the cutting insert 22' is provided with a male part 3' which is included in the tool coupling according to the invention. Said male part 3' has principally the same design as the male part 3 of the embodiment according to Figs 1-4, i.e. the male part 3' comprises a number of first teeth, which are spaced-apart from each other, and which are tangent to an imaginary circle having its centre along the centre axis 7', and extend in the direction radially from said centre axis 7'. The first teeth are spaced-apart by a number of first recesses, which are tangent to an imaginary circle also having its centre along the centre axis 7'. Correspondingly, as for the male part 3, the male part 3' has a slightly conical shape.

As is schematically shown in Fig 6, the insert seat of the holder 23' is in the form of a female seat 11', which has principally the same design as the female seat 11. Thus, when the cutting insert 22' is mounted, the male part 3' of said cutting insert is received in the female seat of the holder 23'. By tightening the securing screw 24', the male part 3' and the female seat 11' will come into abutment against each other, preferably in the way illustrated in Fig 4. When the cutting insert 22' is indexed, the securing screw 24' is loosened and the cutting insert 22' is turned to a position where the male part 3' and the female seat 11' again fit into each other. Then the securing screw 24' is retightened.

In Fig 8, a circular cutting insert 22" is shown, the bottom side of which is provided with a female seat 11" of the same design as the female seat 11, i.e. the female seat 11" is provided with a number of second teeth 12", which are spaced-apart from each other, and are tangent to an imaginary circle having its centre on a second centre axis 13". The teeth are directed radially towards said second centre axis 13". The second teeth 12" are spaced-apart by a number of second recesses 14", which are tangent to an imaginary circle having its centre on the second centre axis 13", and extend radially towards centre axis 13". Also the female seat 11" has a slightly conical shape, with a conicity which preferably equals the conicity of a cooperating male part. In the centre of the female seat 11", a second internally threaded cylindrical hole 15" is recessed having a centre coinciding with the second centre axis 13".

The cutting insert 22" is intended to be secured to a holder (not shown), including a male part having a shape fitting the female seat. The circular cutting insert 22" is secured to the holder in a corresponding way as the triangular cutting insert 22', i.e. by means of a securing screw (not shown).

In Figs 9-14, a number of embodiments of co-operating teeth and recesses, respectively, are shown, which are included in tool couplings according to the invention, i.e. the illustrated tooth is normally included in a male part while the illustrated recess normally is included in a female seat.

In Fig 9, a detail of a tooth 5 of the male part 3 and a tooth 12 of the female seat 11 are shown. In the above-described embodiments, the female seat 11 applies a rotation to the male part 3 by the fact that the tooth 12 of the female seat 11 is in contact with the tooth 5 of the male part 3. In doing so, one or more contact areas P arise between these cooperating teeth 5 and 12. With a driving angle α, it should in this connection be understood the angle α which is formed between a line L which is perpendicular to the plane of force F in the contact area P between the teeth 5, 12 as well as a symmetry line CL for the tooth 5 of the male part 3.

In Figs 10-14, the driving angles α are drawn in for different embodiments of teeth and co-operating recesses in a coupling according to the invention. As seen in Figs 10-14, a tooth and a co-operating recess do not need to have a shape corresponding with each other. In this connection, the essential thing is that a contact area P is formed between the teeth 5 and 12, at which there in principle does not have to be any mutual abutment between the teeth and the appurtenant recess besides said contact area P. According to the invention, the driving angle α, as it is defined in Fig 9, should be in the interval -5° - +45°, preferably -2° - +25°.

The number of teeth of the male part 3; 3' and the female part 11; 11' may vary between 3 and 12, preferably between 6 and 8.

### Feasible Modifications of the Invention

In the above-described embodiments, the male parts and female seats are formed with identical teeth around the entire circumference thereof. However, it is possible, within the scope of the present invention, that the teeth of the male part and the female seat have a different design along the circumference of the male part and the female seat, respectively. Thereby, a guiding of the mutual indexing of the male part and the female seat can take place, i.e. they only fit together in a limited number of positions.

In the above-described embodiments, all teeth have an equally large radial extension from the centre axis 7, 13; 7'; 13". However, it is also possible, within the scope of the present invention that some tooth or teeth have an extension from the centre axis 7, 13; 7'; 13" deviating from the extension of the other teeth. This may, for instance, be the case if the tool coupling is desired to be indexed in a special position.

In the above-described embodiments, the male part 3; 3' is alternatively situated on the part of the tool which carries the cutting members/constitutes the cutting member for the chip removing machining or on the proper tool body/holder. The same is valid for the female seat 11; 11". This variation of the location of the male part 3; 3' and the female seat 11; 11" is general.

Above, the tool coupling according to the present invention has been described in connection with a turning tool for parting and grooving. However, this only constitutes examples of tools where the tool coupling according to the present invention may be applied. However, tool couplings according to the invention may also be used together with rotary tools, for instance milling cutters or drills.

## Claims

1. Tool coupling, for coupling together a fastening part (10; 23') and a tool body (1) which carries or constitutes a cutting insert (22'; 22") for chip removing machining, comprising a male part (3; 3'), having a first centre axis (7; 7'), and a female seat (11; 11"), having a second centre axis (13; 13"), and being intended to receive the male part, and an element (17; 24') for axially pressing the male part (3, 3') into the female seat (11; 11'), **characterized in, that** the male part (3; 3') comprises a number of first teeth (5; 5') which extend radially outward from a common land and are interspaced by a number of first recesses (9; 9'), that the female seat (11; 11") comprises a number of second teeth (12; 12") which protrude radially inward from a surrounding land and are interspaced by a number of second recesses (14; 14") said teeth being slightly conical in the axial direction and that a driving angle (α) in the contact areas (P) between interengaging teeth (5, 12; 5'; 12") of the male part (3, 3') and the female seat (11; 11"), respectively, is in the range of between -2° and + 45°.

2. Tool coupling according to claim 1, wherein the driving angle (α) is is in the range of between -2° and +25°.

3. Tool coupling according to claim 1 or 2, **characterized in, that** the teeth (5, 12; 5'; 12") are tangent to a first imaginary circle having its centre along a centre axis (7, 13; 7'; 13") and that the recesses (9, 14; 9'; 14") are tangent to a second imaginary circle having its centre along the same centre axis.

4. Tool coupling according to any one of the preceding claims, **characterized in, that** the teeth (5, 12; 5'; 12") and the recesses (9, 14; 9'; 14") are arranged with a constant pitch around the centre axes (7, 13; 7'; 13").

5. Tool coupling according to any one of the preceding claims, **characterized in, that** the teeth (5, 12; 5'; 12") have convex free ends, and the recesses (9, 14; 9'; 14") concave bottoms.

6. A tool body to be used in the tool coupling according to any one of the preceding claims including a male part having a centre axis (7'), **characterized in that** the male part (3') comprises a number of teeth (5') protruding radially outward from a common land and being interspaced by a number of recesses (9'), the teeth being slightly conical in the axial direction.

7. A tool body to be used in the tool coupling according to any one of claims 1-5, including a female seat (11"), having a centre axis (13"), **characterized in that** the female seat (11") comprises a number of teeth (12") protruding radially inward from a surrounding land, and being interspaced by a number of recesses (14"), the teeth being slightly conical in the axial direction.

## Patentansprüche

1. Werkzeugkupplung für das Zusammenkuppeln eines Befestigungsteils (10; 23') und eines Werkzeugkörpers (1), der einen Schneideinsatz (22'; 22") für die spanabhebende Bearbeitung trägt oder bildet, mit einem Einsteckteil (3; 3'), das eine erste Mittelachse (7; 7') hat, und einem Aufnahmesitz (11; 11"), der eine zweite Mittelachse (13: 13") hat mit der Bestimmung zur Aufnahme des Einsteckteils, und mit einem Element (17; 24') für das axiale Hineinpressen des Einsteckteils (3, 3') In den Aufnahmesitz (11; 11'), **dadurch gekennzeichnet, daß** das Einsteckteil (3: 3') eine Anzahl von ersten Zähnen (5; 5') aufweist, die sich von einem gemeinsamen Feld radial nach außen erstrecken und durch eine Anzahl von ersten Ausnehmungen (9; 9') im Abstand angeordnet sind, daß der Aufnahmesitz (11; 11") eine Anzahl von zweiten Zähnen (12; 12") aufweist, die von einem umgebenden Feld radial nach einwärts vorstehen und durch eine Anzahl von zweiten Ausnehmungen (14; 14") im Abstand voneinander angeordnet sind, wobei die Zähne in der axialen Richtung etwas konisch sind, und daß ein Treibwinkel (α) in den Kontaktbereichen (P) zwischen miteinander in Eingriff befindlichen Zähnen (5, 12; 5'; 12") des Einsteckteils (3, 3') bzw. des Aufnahmesitzes (11; 11") in dem Bereich von zwischen -2° und +45° liegt.

2. Werkzeugkupplung nach Anspruch 1, wobei der Treibwinkel (α) in dem Bereich von zwischen -2° und +25° liegt.

3. Werkzeugkupplung nach Anspruch 1 oder 2, **dadurch gekennzeichnet, daß** die Zähne (5, 12; 5'; 12") Tangenten an einen ersten gedachten Kreis sind, dessen Mittelpunkt längs einer Mittelachse (7, 13; 7'; 13") liegt, und daß die Ausnehmungen (9,14; 9'-,14") Tangenten an einen zweiten gedachten Kreis sind, dessen Mittelpunkt längs derselben Mittelachse liegt.

4. Werkzeugkupplung nach einem der vorhergehenden Ansprüche, **dadurch gekennzelch**net, daß die Zähne (5, 12; 5'; 12") und die Ausnehmungen (9, 14; 9'; 14") mit einer konstanten Teilung um die Mittelachsen herum (7,13; 7'; 13") angeordnet sind.

5. Werkzeugkupplung nach einem der vorhergehenden Ansprüche, **dadurch gekennzeichnet, daß** die Zähne (5, 12; 5'; 12") konvexe freie Enden haben und die Ausnehmungen (9, 14; 9'; 14") konkave Böden haben,

6. Werkzeugkörper für die Verwendung in der Werkzeugkupplung nach einem der vorhergehenden Ansprüche, mit einem Einsteckteil mit einer Mittelachse (7'), **dadurch gekennzeichnet, daß** das Einsteckteil (3') eine Anzahl von Zähnen (5') aufweist, die von einem gemeinsamen Feld radial nach außen vorstehen und durch eine Anzahl von Ausnehmungen (9') Im Abstand voneinander angeordnet sind, wobei die Zähne In der axialen Richtung etwas konisch sind.

7. Werkzeugkörper zur Verwendung in der Werkzeugkupplung nach einem der Ansprüche 1 bis 5, mit einem Aufnahmesitz (11") mit einer Mittelachse (13"), **dadurch gekennzelch**net, daß der Aufnahmesitz (11 ") eine Anzahl von Zähnen (12') aufweist, die von einem umgebenden Feld radial einwärts vorspringen und durch eine Anzahl von Ausnehmungen (14") im Abstand voneinander angeordnet sind, wobei die Zähne in der axialen Richtung ein wenig konisch sind.

## Revendications

1. Raccord d'outil, pour raccorder une partie de fixation (10 ; 23') et un corps d'outil (1) qui supporte ou constitue une plaquette de coupe (22' ; 22") pour usinage par enlèvements de copeaux, comprenant une partie mâle (3 ; 3'), présentant un premier axe central (7 ; 7'), et un logement femelle (11 ; 11"), présentant un second axe central (13 ; 13"), et étant conçu pour recevoir la partie mâle, et un élément (17 ; 24') pour presser axialement la partie mâle (3 ; 3') dans le logement femelle (11 ; 11'), **caractérisé en ce que** la partie mâle (3 ; 3') comprend un nombre de premières dents (5; 5') qui s'étendent radialement vers l'extérieur depuis un emplacement commun et sont intercalées par un nombre de premiers renfoncements (9 ; 9'), **en ce que** le logement femelle (11 ; 11") comprend Un nombre de secondes dents (12 ; 12") qui font saillie radialement vers l'intérieur depuis un emplacement voisin et sont intercalées par un nombre de seconds renfoncements (14 ; 14"), lesdites dents étant légèrement coniques dans la direction axiale et **en ce qu'**un angle de pénétration (a) dans les zones de contact (P) entre les dents mutuellement en prise (5, 12 ; 5' ; 12") de la partie mâle (3 ; 3') et du logement femelle (11; 11"), respectivement, se trouve dans la plage entre -2 ° et + 45 °.

2. Raccord d'outil selon la revendication 1, dans lequel l'angle de pénétration (a) se trouve dans la plage entre -2 ° et +25 °.

3. Raccord d'outil selon la revendication 1 ou 2, **caractérisé en ce que** les dents (5, 12 ; 5' ; 12") sont tangentes à un premier cercle imaginaire présentant son centre le long d'un axe central (7, 13 ; 7' ; 13") et **en ce que** les renfoncements (9, 14 ; 9' ; 14") sont tangents à un second cercle imaginaire présentant son centre le long du même axe central.

4. Raccord d'outil selon l'une quelconque des revendications précédentes, **caractérisé en ce que**, les dents (5, 12 ; 5' ; 12") et les renfoncements (9, 14 ; 9' ; 14) sont agencés avec un pas constant autour des axes centraux (7, 13 ; 7' ; 13").

5. Raccord d'outil selon l'une quelconque des revendications précédentes, **caractérisé en ce que** les dents (5, 12; 5' ; 12") présentent des extrémités libres convexes, et les renfoncements (9, 14 ; 9' ; 14") des fonds concaves.

6. Corps d'outil qui doit être utilisé dans le raccord d'outil selon l'une quelconque des revendications précédentes comprenant une partie mâle présentant un axe central (7'), **caractérisé en ce que** la partie mâle (3') comprend un nombre de dents (5') faisant saillie radialement vers l'extérieur depuis un emplacement commun et étant intercalées par un nombre de renfoncements (9'), les dents étant légèrement coniques dans la direction axiale.

7. Corps d'outil qui doit être utilisé dans le raccord d'outil selon l'une quelconque des revendications 1 à 5, comprenant un logement femelle (11"), présentant un axe central (13"), **caractérisé en ce que** le logement femelle (11") comprend un nombre de dents (12") faisant saillie radialement vers l'intérieur depuis un emplacement voisin, et étant intercalées par un nombre de renfoncements (14"), les dents étant légèrement coniques dans la direction axiale.
